# EUROPÄISCHE PATENTANMELDUNG

(11) **EP 1 621 588 A1**
(43) Veröffentlichungstag der Anmeldung: **01.02.2006**
(21) Anmeldenummer: 04018067.1
(22) Anmeldetag: 30.07.2004
(51) Int. Cl.: C09D 5/00, C09D 5/20, C09D 175/04

(54) **Strahlenhärtbare wässrige Bindemittelmischung**

(71) Anmelder: Cytec Surface Specialties Austria GmbH, 8402 Werndorf (AT)
(72) Erfinder: Awad, Rami-Raimund, Dr., 8042 Graz (AT); Lunzer, Florian, Dr., 08018 Barcelona (ES)
(74) Vertreter: Deckers, Hellmuth Alexander

(57) **Zusammenfassung**

Wäßrige strahlenhärtbare Bindemittelmischung enthaltend ein wasserdispergierbares Polyurethanharz A, ein wasserdispergierbares Acrylatharz B und ein durch Einwirkung von energiereicher Strahlung härtendes wasserdispergierbares Urethanacrylat C, und deren Verwendung zur temporären Beschichtung von Substraten

## Beschreibung

Die Erfindung betrifft eine strahlenhärtbare wäßrige Bindemittelmischung. Weiter betrifft sie die damit hergestellten durch Bestrahlung gehärteten Beschichtungen sowie die Anwendung der Beschichtungen als Schutzbeschichtung für Kunststoffe und Metalle und insbesondere als Maskierung beim Ätzen von Metallen.

Teile aus Metallen und Kunststoffen können insbesondere während der Montage oberflächlich beschädigt werden. Es ist daher wünschenswert, Einbauteile aus diesen Materialien mit einer Schutzbeschichtung zu versehen, die nach dem Einbau einfach entfernt werden kann und die die Einbauteile wirksam vor chemischer und insbesondere mechanischer Beschädigung wie Stoß, Schlag oder Kratzen schützt. Eine derartige Schutzbeschichtung soll sowohl einen wirksamen Schutz bieten als auch leicht abzuziehen sein, ohne daß es beim Abziehen zu einer oberflächlichen Schädigung des damit geschützten Teils kommt.

Werden Metalle als Konstruktionswerkstoffe eingesetzt, so ist es bevorzugt, die Dicke der verwendeten Bleche oder Platten der geforderten Festigkeit oder Steifigkeit des daraus hergestellten Bauteils anzupassen. Auf diese Weise kann das Gewicht des fertigen Bauteils möglichst gering gehalten werden. Werden bei einem Bauteil unterschiedliche Anforderungen an Festigkeit und Steifigkeit an verschiedenen Orten gestellt, so kann man derartige Bauteile aus unterschiedlich dicken Platten oder Blechen fertigen, die dann auf geeignete Weise miteinander verbunden werden müssen, beispielsweise flächig oder auf Stoß durch Kleben oder Schweißen, oder überlappend durch Nieten oder Schrauben. Derartige Verbindungsstellen sind üblicherweise auch Schwachstellen, an denen es bei Einleitung von Kräften in das Bauteil bevorzugt zu katastrophalem Versagen (Bruch) kommen kann.

Es ist daher erwünscht, Übergänge zwischen verschieden dicken metallischen Materialien dadurch zu realisieren, daß in Zonen mit geringeren Anforderungen an die Festigkeit und Steifigkeit Material entsprechend diesen geringeren Anforderungen abgetragen wird. Dies kann beispielsweise durch Schleifen oder spanabhebendes Bearbeiten wie Drehen oder Fräsen geschehen. Es hat sich jedoch gezeigt, daß bei derartigem Bearbeiten des Materials auch Risse oder Riefen gebildet werden, die die Festigkeit und Steifigkeit des Materials ungünstig beeinflussen. Es ist daher erwünscht, beim oberflächlichen Bearbeiten von Metallen möglichst glatte Flächen und verrundete Dickenübergänge zu erzeugen.

Dies kann beispielsweise dadurch geschehen, daß die Metalle durch Ätzen bearbeitet werden. Dabei wird die Oberfläche des Metalls an den Stellen, die nicht weggeätzt werden sollen, mit einer Beschichtung abgedeckt, die später wieder abgezogen werden kann. Dann wird das gesamte Werkstück in ein Ätzbad gelegt; an den unbedeckten Stellen wird das Metall von der Oberfläche her weggelöst. Die Zeit der Einwirkung des Ätzbades bestimmt die Tiefe des chemischen Abtrags des Metalls an den unbedeckten Stellen. Ist der gewünschte Abtrag erreicht, so wird das Werkstück aus dem Bad genommen und abgespült.

Die Beschichtung muß gegen das Ätzbad beständig sein, sie muß das darunterliegende Metall sicher über die gesamte bedeckte Fläche vor dem Angriff des Ätzbades schützen, und sie muß nach dem Ätzen und dem Spülen des Werkstücks möglichst ohne großen Aufwand einfach zu entfernen sein.

Die Strukturierung der Oberfläche wird dadurch erreicht, daß zunächst das gesamte Werkstück mit einer durch Bestrahlung gehärteten Beschichtung bedeckt wird, die durch Einschneiden und Abziehen von Teilen der Beschichtung an den zu bearbeitenden Stellen dann teilweise entfernt wird. Die Beschichtung muß einen ausreichenden Schutz gegen die Beschädigung des Substrats durch das Ätzbad bieten, andererseits muß sie auch einfach durch Abziehen möglichst ohne Einreißen zu entfernen sein. Dabei ist es erforderlich, daß die Beschichtung zäh und flexibel ist, und es muß eine ausreichend große Schichtdicke von mindestens 200 µm aufgebracht werden. Bei großen Schichtdicken können flexible Beschichtungen nur durch mehrfaches Applizieren und Härten hintereinander erreicht werden; in einem solchen Fall ist die Zeit des Härtens wesentlich für die Anwendung.

Es ist bekannt, Metalloberflächen beispielsweise mit Lösungen von Kautschuken, insbesondere SBR-Kautschuken (styrene butadiene rubber) oder hydriertem SBR in organischen Lösungsmitteln zu beschichten. Derartige Beschichtungen sind zwar elastisch und lassen sich gut abziehen, die erforderliche Schichtdicke macht jedoch einen Mehrfachauftrag erforderlich, wobei zwischen den einzelnen Aufträgen immer getrocknet werden muß. Das Aufheizen, Abbinden und Abkühlen benötigt jedesmal einige Stunden. Es sind auch wäßrige Systeme bekannt, die Kautschuklatices und Plastifiziermittel wie Epoxidharze, Phenolharze oder Phenoxyharze enthalten. Auch diese Systeme erfordern für den Mehrfachauftrag jeweils Heiz- und Kühlschritte.

Es besteht daher die Aufgabe, ein Beschichtungsmittel zur Verfügung zu stellen, mit dem eine flexible Beschichtung von Substraten möglich ist, wobei die Beschichtung durch Abziehen ohne Beschädigung des Substrats zu entfernen ist, und mit dem auch eine mehrfache Beschichtung des Substrats hintereinander zum Erreichen großer Schichtdicken in möglichst kurzer Zeit durchführbar ist. Diese Aufgabe wird durch Beschichtungsmittel gelöst, die die erfindungsgemäße wäßrige strahlenhärtbare Bindemittelmischung enthalten.

Die Erfindung betrifft daher eine wäßrige strahlenhärtbare Bindemittelmischung enthaltend ein wasserdispergierbares Polyurethanharz **A**, ein wasserdispergierbares Acrylatharz **B** und ein durch Einwirkung von energiereicher Strahlung härtendes wasserdispergierbares Urethanacrylat **C**.

Die Erfindung betrifft weiter Beschichtungsmittel, die die erfindungsgemäße wäßrige strahlenhärtbare Bindemittelmischung enthalten.

Die Erfindung betrifft weiter die Verwendung von Beschichtungen, die mit dieser Bindemittelmischung hergestellt werden, wobei ein Beschichtungsmittel enthaltend die erfindungsgemäße Bindemittelmischung auf eine Substratoberfläche aufgebracht und getrocknet wird, und die getrocknete Beschichtung durch Bestrahlung mit energiereicher Strahlung vernetzt wird, zum temporären Schutz von Oberflächen der Substrate.

Die Erfindung betrifft ebenfalls ein Verfahren zur mehrfachen Beschichtung von Substratoberflächen, wobei ein Beschichtungsmittel enthaltend die erfindungsgemäße Bindemittelmischung auf eine Substratoberfläche aufgebracht und getrocknet wird, und die getrocknete Beschichtung durch Bestrahlung mit energiereicher Strahlung vernetzt wird, wobei dieser Beschichtungs- und Vernetzungsvorgang mindestens noch einmal wiederholt wird.

Die Erfindung betrifft schließlich ein Verfahren zum selektiven Ätzen von Metallteilen, wobei die aufgebrachte Beschichtung in vorbestimmten Zonen durch Einschneiden und Abziehen entfernt wird, und das so partiell geschützte Substrat durch Einlegen in eine Ätzlösung oder Überschichten des Substrats mit einer Ätzlösung von der Oberfläche her abgeätzt wird während einer Zeit, die durch die gewünschte Ätztiefe bestimmt ist, Abspülen des Substrats und Entfernen der Beschichtung durch Abziehen.

Das Polyurethanharz **A** ist ein selbstemulgierendes Polyurethan enthaltend Bausteine abgeleitet von Polyolen **A1** mit einer zahlerumttleren molaren Masse von 400 g/mol bis 10000 g/mol, mehrfunktionellen Isocyanaten **A2** und niedermolekularen Polyolen **A3** mit mindestens zwei Hydroxylgruppen und mindestens einer Gruppe, die Anionen bildet, wie Carbonsäure- oder Sulfonsäuregruppen. Dabei enthält die Komponente **A1** mindestens einen Massenanteil von 10 %, bevorzugt mindestens 25 %, und insbesondere mindestens 40 % eines Polybutadien-Diols oder -Polyols mit einer zahlenmittleren molaren Masse Mₙ von ca. 1000 g/mol bis 15 000 g/mol.

Die mehrfunktionellen Isocyanate **A2** sind bevorzugt aliphatische lineare, verzweigte und cyclische Isocyanate wie 1,4-Tetramethylendiisocyanat, 1,6-Hexamethylendiisocyanat (HDI), 2,2,4,- und 2,4,4-Trimethylhexandiisocyanat, Dodecamethylendiisocyanat, 1,4-Diisocyanatocyclohexan, 1-Isocyanato-3,3,5-trimethyl-5-isocyanatomethyl-cyclohexan (Isophorondiisocyanat, IPDI) und Bis-(4-isocyanatocyclohexyl)methan (HMDI). Es lassen sich auch solche gemischt aromatisch-aliphatischen Isocyanate einsetzen, bei denen die Isocyanatgruppe an aliphatische Kohlenstoffatome gebunden ist, wie z. B. Tetramethylxylylendiisocyanat. Gleichfalls geeignet sind die durch partielle Reaktion mit Alkoholen und nachfolgende Addition gebildeten Allophanate und die durch partielle Reaktion mit Wasser und nachfolgende Addition gebildeten Biurete, sowie die durch Trimerisieren gebildeten Isocyanurate und die durch Reaktion mit mehrwertigen Alkoholen wie z. B. Trimethylolpropan gebildeten Addukte. Weniger bevorzugt, aber ebenfalls für die Erfindung geeignet sind aromatische Isocyanate, insbesondere Diisocyanate wie 4,4'-Diphenylmethandiisocyanat (MDI), 2,4- und 2,6-Toluylendiisocyanat und deren technische Gemische (TDI), sowie 1,3- und 1,3-Phenylendiisocyanat, Diisocyanatonaphthalin und Triphenylmethantriisocyanat, sowie die von diesen abgeleiteten Isocyanurate, Uretdione, Allophanate und Biurete.

Die Polyole **A3** sind bevorzugt Dihydroxycarbonsäuren mit 4 bis 8 Kohlenstoffatomen wie Bishydroxymethylpropionsäure und Bishydroxymethylessigsäure oder Weinsäure, oder Dihydroxysulfonsäuren wie N,N-Bis-(2-hydroxyäthyl)-2-aminoäthansulfonsäure und N,N-Bis-(2-hydroxyäthyl)3-amino-2-hydroxypropansulfonsäure.

Die wasserdispergierbaren Acrylatharze **B** sind bevorzugt selbstvernetzende Acrylatharze enthaltend Bausteine abgeleitet von olefinisch ungesättigten Carbonsäuren **B1**, Estern **B2** von aliphatischen linearen, verzweigten oder cyclischen Alkoholen mit den unter **B1** genannten Säuren, gegebenenfalls Hydroxylgruppen enthaltenden Estern **B3** von mehrfunktionellen Alkoholen mit den unter **B1** genannten Säuren, olefinisch ungesättigten Monomeren **B4,** die keine Hydroxylgruppen oder Carbonsäuregruppen, Carbonylgruppen oder Estergruppen enthalten, sowie im Fall von selbstvernetzenden Acrylatharzen solchen olefinisch ungesättigten Monomeren **B5**, die aldehyd- oder ketonartige Carbonylgruppen aufweisen. Als Vernetzungsmittel **B6** werden diesen aliphatische Diamine **B61** oder Dihydrazide **B62** von aliphatischen Dicarbonsäuren zugesetzt, wobei die Stoffmengen der Amino- oder Hydrazidgruppen in **B6** das 0,7 bis 1,4-fache der Stoffmenge der Carbonylgruppen von B5 in dem Acrylatharz **B** beträgt.

Bevorzugt sind die olefinisch ungesättigten Carbonsäuren **B1** Acryl- oder Methacrylsäure sowie Halbester der Malein- oder Fumarsäure mit aliphatischen Alkoholen mit 1 bis 4 Kohlenstoffatomen wie Methanol, Äthanol, n-Propanol oder n-Butanol.

Bevorzugte Ester **B2** sind Alkylester der unter **B1** genannten Säuren mit aliphatischen Alkoholen mit 1 bis 20 Kohlenstoffatomen wie Methanol, Äthanol, n- und iso-Propanol, n-, sek.-, iso- oder tert.-Butanol, Amylalkohol, Hexanol, 2-Äthylhexanol, Decyl- und Isotridecylalkohol.

Bevorzugte Hydroxylgruppen enthaltende Ester **B3** sind Ester der unter **B1** genannten Säuren mit zwei- oder mehrwertigen Alkoholen mit 2 bis 10 Kohlenstoffatomen wie 2-Hydroxyäthyl(meth)-acrylat, 3-Hydroxypropyl(meth)acrylat, 4-Hydroxybutyl(meth)acrylatund 2-Hydroxy-1-methyl-äthyl-(meth)acrylat.

Bevorzugte olefinisch ungesättigte Monomere **B4** sind Styrol, Vinyltoluol und die Vinylester der ®Versatic-Säure.

Bevorzugte Carbonylgruppen enthaltende Monomere **B5** sind Diaceton(meth)acrylamid, (Meth)-Acrylsäure-acetoacetoxyäthylester, Vinylmethylketon und Allylacetoacetat.

Bevorzugte Vernetzungsmittel **B6** sind Adipinsäuredihydrazid, Hexamethylendiamin und Diäthylentriamin.

Die wasserdispergierbaren Urethanacrylatharze **C** sind Reaktionsprodukte von Estern **C1** mit mindestens einer freien Hydroxylgruppe von zwei- oder mehrwertigen Alkoholen **C11**, die mit unter **B1** genannten olefinisch ungesättigten Carbonsäuren teilweise verestert sind und zwei- oder mehrfunktionellen Isocyanaten **C2** sowie den unter **A3** genannten Säuregruppen enthaltenden Polyolen.

Die Ester **C1** sind bevorzugt Reaktionsprodukte von Alkoholen **C11** ausgewählt aus Trimethylolpropan, Trimethyloläthan, Pentaerythrit, Ditrimethylolpropan, Ditrimethyloläthan und Dipentaerythrit sowie den Äthyoxylierungsprodukten der genannten mehrwertigen Alkohole.

Bevorzugt werden als Isocyanate **C2** die unter **A2** genannten verwendet.

Bevorzugt enthält die Bindemittelmischung Massenanteile von 30 % bis 75 % des wasserdispergierbaren Polyurethans **A,** 10 % bis 40 % des wasserdispergierbaren Acrylatharzes **B** und 5 % bis 30 % des wasserdispergierbaren Urethanacrylatharzes C. Darüber hinaus enthalten die mit dieser Bindemittelmischung formulierten Beschichtungsmittel mindestens einen Photoinitiator sowie weitere übliche Additive wie Untergrundbenetzer, Verlaufshilfsmittel, Antiabsetzmittel und Antischaummittel.

Die Beschichtungsmittel werden auf die Substratoberfläche mit einer Schichtdicke von mindestens 500 µm, bevorzugt mindestens 750 µm in mindestens zwei aufeinanderfolgenden Beschichtungs- und Vernetzungsschritten aufgetragen und gehärtet. Vor dem Härten durch die Einwirkung energiereicher Strahlung wird durch kurzzeitiges Erwärmen auf ca. 50 °C bis ca. 80 °C zumindest ein Teil des Wassers entfernt. Diesen Schritt bezeichnet man als "Abdunsten". Das Abdunsten kann unterstützt werden durch Anblasen des beschichteten Substrats mit gegebenenfalls erwärmter Luft.

Im Fall von Aluminium als Substrat wird das beschichtete Aluminium-Werkstück in eine wäßrige Ätzlösung aus Natronlauge (bevorzugt mit einer Konzentration von 150 g/l bis 200 g/l), einem Hydroxyamin (bevorzugt Triäthanolamin, ca. 0,5 g/l bis 10 g/l) und Natriumsulfid (bevorzugt 5 g/l bis 20 g/l) getaucht. Der Ätzprozeß wird bevorzugt bei erhöhter Temperatur (80 °C bis 110 °C) durchgeführt. Je nach der gewünschten Ätztiefe beträgt die Verweilzeit in der Ätzlösung zwischen 10 Minuten und 120 Minuten, bevorzugt zwischen 30 Minuten und 90 Minuten. Das Volumen der Ätzlösung wird üblicherweise so gewählt, daß nach Abschluß des Ätzvorgangs die Konzentration des Aluminium in der Lösung zwischen 30 g/l und 100 g/l beträgt.

Dabei muß die Beschichtung einerseits die darunterliegende Substratschicht sicher vor dem Angriff durch die Ätzlösung schützen; es darf zu keiner Unterwanderung unter die Beschichtung und daraus resultierend zu Blasenbildung und Ablösung der Beschichtung kommen. Andererseits muß die Beschichtung mit begrenztem Kraftaufwand abziehbar sein, und darf möglichst bei dem Abziehen nicht einreißen, also weitgehend in einem Stück abzuziehen sein. Eine Abzugskraft, gemessen an einem ca. 2,5 cm breiten Streifen von ca. 3 bis 12 N ist ideal.

Ein weiterer Vorteil der vorliegenden Erfindung ergibt sich dadurch, daß durch Abdecken des beschichteten Substrats mit einer lichtundurchlässigen Maske nur diejenigen Zonen der Beschichtung gehärtet werden, die vom Licht getroffen werden. Es wird bei dieser Verfahrensweise garnicht erst erforderlich, die zu ätzenden Stellen durch Schneiden und Abziehen der gehärteten Beschichtung freizulegen, vielmehr kann die nicht gehärtete Beschichtung vom Substrat abgewaschen werden. Dabei wird vermieden, die Oberfläche des Substrats durch das Einschneiden des Beschichtungsfilms zu verletzen.

### Beispiele

### Beispiel 1

Ein Beschichtungsmittel wurde nach der folgenden Rezeptur hergestellt:
- 65,0 g: einer wäßrigen PU-Dispersion mit Polybutadien-Bausteinen
- 18,5 g: einer durch Zusatz von Adipinsäuredihydrazid selbstvernetzenden Acrylatdispersion
- 9,3 g: einer wäßrigen Urethanacrylatdispersion
- 2,2 g: eines Untergrundbenetzungsmittels auf Basis von polyäthermodifiziertem Polydimethylsiloxan
- 0,3 g: eines Verlaufshilfsmittels auf Basis von polyäthermodifiziertem Polydimethylsiloxan
- 2,4 g: eines Photoinitiators, der eine Mischung ist von Benzophenon und Hydroxycyclohexylphenylketon

Mit diesem Beschichtungsmittel wurden in 5 Arbeitsgängen jeweils ca. 100 µm bis ca. 150 µm dicke Schichten auf ein Aluminiumblech aufgebracht und nach dem Auftrag und einem folgenden Abdunstschritt durch Heizen auf 60 °C bis 70 °C während 10 Minuten durch Bestrahlen mit UV-Licht (von je 2 mit Gallium dotierten Quecksilberlampen und undotierten Quecksilberlampen mit einer auf die Bogenlänge bezogene Leistungsaufnahme von je 80 W/cm) bei einer Durchlaufgeschwindigkeit von 15 m/min durch die Bestrahlungszone gehärtet.

Nach dem Härten ergab sich eine elastische, fest auf dem Aluminiumblech haftende Schicht mit einer Dicke von ca. 500 µm. Sie ließ sich mit einem Messer ohne weiteres schneiden, die rechteckigen oder rund begrenzten Zonen ließen sich mit einer auf die Streifenbreite von 25,4 mm bezogenen Kraft von ca. 8 N abziehen, wobei die abgezogene Folie sich jeweils als Ganzes von der Metallunterlage lösen ließ.

Zwischen den einzelnen Auftragsschritten waren zur Härtung jeweils nur wenige Minuten gemäß der angegebenen Bandgeschwindigkeit erforderlich. Das Substrat mußte zur Härtung nicht erhitzt werden, daher entfiel selbstverständlich auch die Abkühlzeit nach der Härtung.

Nach einer Verweilzeit von einer Stunde in dem oben beschriebenen Ätzbad bei 105 °C war noch keine Schädigung der Beschichtung festzustellen.

### Beispiel 2 (Vergleich)

In eine wäßrige Dispersion eines Phenoxyharzes (Säurezahl 47 mg/g, mit Ammoniak neutralisiert, Festkörper-Massenanteil 34 %) wurden ein Styrol-Butadien-Kautschuk-Latex und ein Acrylatverdicker eingemischt. Eine hochviskose Flüssigkeit (2800 mPa·s bei 25 °C) wurde erhalten, mit der übereinander 4 Beschichtungen auf einem Aluminiumblech vorgenommen wurden. Zwischen den einzelnen Beschichtungen wurde jeweils erst eine Stunde bei 72 °C und eine weitere Stunde bei 90 °C getrocknet, die erzeugte Trockenfilmdicke betrug jeweils 120 µm bis 125 µm.

Im Vergleich erforderte die Beschichtung eines gleichartigen Aluminiumblechs mit einer SBR-Kautschuk-Dispersion zur Erzielung einer Schichtdicke von ca. 500 µm eine Bearbeitungszeit von insgesamt 12 Stunden, während dies bei dem erfindungsgemäßen Verfahren insgesamt nur ca. 25 Minuten dauerte.

## Patentansprüche

1. Wäßrige strahlenhärtbare Bindemittelmischung enthaltend ein wasserdispergierbares Polyurethanharz **A**, ein wasserdispergierbares Acrylatharz **B** und ein durch Einwirkung von energiereicher Strahlung härtendes wasserdispergierbares Urethanacrylat **C**.

2. Wäßrige strahlenhärtbare Bindemittelmischung nach Anspruch 1, **dadurch gekennzeichnet, daß** das Polyurethanharz **A** ein selbstemulgierendes Polyurethan ist enthaltend Bausteine abgeleitet von Polyolen **A1** mit einer zahlenmittleren molaren Masse von 400 g/mol bis 10000 g/mol, mehrfunktionellen Isocyanaten **A2** und niedermolekularen Polyolen **A3** mit mindestens zwei Hydroxylgruppen und mindestens einer Gruppe, die Anionen bildet.

3. Wäßrige strahlenhärtbare Bindemittelmischung nach Anspruch 2, **dadurch gekennzeichnet, daß** die Komponente **A1** mindestens einen Massenanteil von 10 % eines Polybutadien-Diols oder -Polyols mit einer zahlenmittleren molaren Masse Mₙ von ca. 1000 g/mol bis ca. 15 000 g/mol enthält.

4. Wäßrige strahlenhärtbare Bindemittelmischung nach Anspruch 1, **dadurch gekennzeichnet, daß** die wasserdispergierbaren Acrylatharze **B** selbstvernetzende Acrylatharze sind, enthaltend Bausteine abgeleitet von olefinisch ungesättigten Carbonsäuren **B1**, Estern **B2** von aliphatischen linearen, verzweigten oder cyclischen Alkoholen mit den unter **B1** genannten Säuren, olefinisch ungesättigten Monomeren **B4**, die keine Hydroxylgruppen oder Carbonsäuregruppen, Carbonylgruppen oder Estergruppen enthalten, sowie olefinisch ungesättigten Monomeren **B5,** die aldehyd- oder ketonartige Carbonylgruppen aufweisen, wobei als Vernetzungsmittel **B6** aliphatische Diamine **B61** oder Dihydrazide **B62** von aliphatischen Dicarbonsäuren zugesetzt sind.

5. Wäßrige strahlenhärtbare Bindemittelmischung nach Anspruch 4, **dadurch gekennzeichnet, daß** die Stoffmenge der Amino- oder Hydrazidgruppen in **B6** das 0,7 bis 1,4-fache der Stoffmenge der Carbonylgruppen von **B5** in dem Acrylatharz **B** beträgt.

6. Wäßrige strahlenhärtbare Bindemittelmischung nach Anspruch 1, **dadurch gekennzeichnet, daß** die wasserdispergierbaren Urethanacrylatharze C Reaktionsprodukte sind von Estern **C1** mit mindestens einer freien Hydroxylgruppe von zwei- oder mehrwertigen Alkoholen **C11,** die olefinisch ungesättigten Carbonsäuren **B1** teilweise verestert sind und zwei- oder mehrfunktionellen Isocyanaten **C2** sowie niedermolekularen Polyolen **A3** mit mindestens zwei Hydroxylgruppen und mindestens einer Gruppe, die Anionen bildet.

7. Beschichtungsmittel enthaltend die wäßrige strahlenhärtbare Bindemittelmischung nach Anspruch 1.

8. Verfahren zum Beschichten von Substratoberflächen zum temporären Schutz, umfassend das Aufbringen eines Beschichtungsmittels enthaltend die Bindemittelmischung nach Anspruch 1 auf eine Substratoberfläche und anschließendes Abdunsten, und Vernetzen der getrockneten Beschichtung durch Bestrahlung mit energiereicher Strahlung.

9. Verfahren zur mehrfachen Beschichtung von Substratoberflächen, wobei ein Beschichtungsmittel enthaltend die Bindemittelmischung gemäß Anspruch 1 auf eine Substratoberfläche aufgebracht und durch Abdunsten getrocknet wird, und die getrocknete Beschichtung durch Bestrahlung mit energiereicher Strahlung vernetzt wird, wobei dieser Beschichtungs- und Vernetzungsvorgang mindestens noch einmal wiederholt wird.

10. Verfahren zum selektiven Ätzen von Metallteilen, wobei die gemäß Anspruch 8 aufgebrachte Beschichtung in vorbestimmten Zonen durch Einschneiden und Abziehen entfernt wird, und das so partiell geschützte Substrat durch Einlegen in eine Ätzlösung oder Überschichten des Substrats mit einer Ätzlösung von der Oberfläche her abgeätzt wird während einer Zeit, die durch die gewünschte Ätztiefe bestimmt ist, Abspülen des Substrats und Entfernen der Beschichtung durch Abziehen.
